# EUROPÄISCHE PATENTSCHRIFT

(11) **EP 3 785 381 B1**
(45) Veröffentlichungstag und Bekanntmachung des Hinweises auf die Patenterteilung: **20.09.2023**
(21) Anmeldenummer: 19720553.7
(22) Anmeldetag: 26.04.2019
(51) Int. Cl.: H04B 10/112

(54) **OPTISCHES FREIRAUM-DATENKOMMUNIKATIONSSYSTEM**
OPTICAL FREE SPACE DATA COMMUNICATION SYSTEM
SYSTÈME OPTIQUE DE COMMUNICATION DE DONNÉES EN ESPACE LIBRE

(30) Priorität: 26.04.2018 DE 102018206523
(43) Veröffentlichungstag der Anmeldung: 03.03.2021
(73) Patentinhaber: Deutsches Zentrum für Luft- und Raumfahrt e.V., 51147 Köln (DE)
(72) Erfinder: MATA CALVO, Ramon, 81543 München (DE); SUROF, Janis, 81375 München (DE)
(74) Vertreter: dompatent von Kreisler Selting Werner - Partnerschaft von Patent- und Rechtsanwälten mbB
(86) Internationale Anmeldenummer: PCT/EP2019/060779
(87) Internationale Veröffentlichungsnummer: WO 2019/207124

(56) Entgegenhaltungen:
- US-A1- 2003 219 253
- US-A1- 2007 286 609
- US-A1- 2008 205 900

## Beschreibung

Die vorliegende Erfindung betrifft ein optisches Freiraum-Datenkommunikationssystem, insbesondere für die optische Satellitenkommunikation sowie ein Verfahren zur optischen Freiraum-Datenübertragung.

Für eine hochratige optische Kommunikation mit einem Satelliten werden kohärente Datenübertragungstechnologien verwendet. Im kohärenten Empfänger wird das empfangene Signal mit einem Lokaloszillator überlagert, um das empfangene Signal ins Basisband zu transformieren. Hierbei ist es für eine erfolgreiche Transformation ins Basisband erforderlich, Signallaser und Lokaloszillator zu synchronisieren. Hierzu ist es bekannt, eine optische Phasenregelschleife (Optical Phase Locked Loop, OPLL) zu verwenden. Hierzu ist aus Geisler, D.J., Yarnall, T.M., Keicher, W.E., Stevens, M.L., Fletcher, A.M., Parenti, R.R., Caplan, D.O. and Hamilton, S.A. 2013, "Demonstration of 2.1 Photon-Per-Bit Sensitivity for BPSK at 9.94-Gb/s with Rate-frac12 FEC", Optical Fiber Communication Conference/National Fiber Optic Engineers Conference 2013 (2013), 0M₂C.6, und Rosenkranz, W. and Schaefer, S., 2016, "Receiver design for optical inter-satellite links based on digital signal processing", Transparent Optical Networks (ICTON), 2016, 28th International Conference on (2016), 1-4, bekannt, dass das empfangene Signal nach Mischung mit dem Lokaloszillator mittels Photodektoren in die elektrische Domäne umgewandelt wird. Die dabei erhaltenen Photoströme werden zur Regelung des Lokaloszillators verwendet und gleichzeitig mittels Transceivern digitalisiert. Dabei ist eine optische Phasenregelschleife kompliziert im Aufbau. Insbesondere müssen alle Kanäle auf Empfängerseite einzeln geregelt werden. Weiterhin ist die optische Phasenregelschleife bezüglich auftretender Frequenzoffsets zwischen Signallaser und Lokaloszillator beschränkt. Weiterhin steigt die Komplexität einer Phasenregelschleife, sollten höhere Modulationsformate verwendet werden.

Weiterhin ist es bekannt, bei fehlender Synchronisation zwischen Lokaloszillator und Signallaser die auftretenden Störungen digital zu kompensieren. Hierzu werden im Empfänger zur Transformation des empfangenen Signals ins Basisband dieses mit dem Lokaloszillator gemischt. Photodetektoren wandeln das Signal in die elektrische Domäne. Sodann wird das Signal mittels Analog-Digital-Wandlern (ADCs) in die digitale Domäne gewandelt. Auftretende Phasen- und Frequenzfehler werden sodann mittels digitaler Signalverarbeitung (Digital Signal Processing, DSP) kompensiert.

Für die Bestimmung von Phasen- und Frequenzunterschied zwischen Signallaser und Lokaloszillator sind verschiedenen Möglichkeiten zur Realisierung innerhalb der digitalen Signalverarbeitung bekannt.

Surof, J., Poliak, J. and Calvo, R.M., 2017, "Demonstration of intradyne BPSK optical free-space transmission in representative atmospheric turbulence conditions for geostationary uplink channel", Opt. Lett. 42, 11 (Jun. 2017), 2173-2176, beschreiben ein Verfahren, bei dem mit Hilfe des unbekannten Signals Frequenzoffset und Phasenoffset kompensiert werden. Hierbei handelt es sich um ein besonders rechenintensives Verfahren. Da dieses Verfahren insbesondere bei der Satellitenkommunikation in einem Satelliten erfolgen muss, ist es weiterhin erforderlich, strahlenfeste und ausfallsichere elektronische Komponenten zu verwenden. Insbesondere bei hohen Rechenanforderungen führt dies jedoch zu Problemen und einer Beschränkung möglicher Komponenten.

Aus Kuri, T., Sakamoto, T. and Yamamoto, N. 2016, "Offset-frequency-spaced two-tone coherent transmission of radio-over-fiber signal with recovered-constellation combining technique", Proc. SPIE (2016), ist bekannt, zusätzlich zu dem Datenlaser einen unmodellierten, aber phasengeregelten Pilotlaser mit festem Frequenzoffset zu übertragen. Ein gleiches Laserpaar wird als Lokaloszillator verwendet, wodurch Phasen- und Frequenzoffset im Empfänger differentiell entfernt werden können. Nachteilig an diesem Verfahren ist, dass durch den zweiten Laser die spektrale Effizienz sinkt, da der Abstand der verwendeten Laser größer als die Baudrate sein muss. Hierdurch vergrößert sich das DWDM-Gitter.

Aus Jacobsen, G., Xu, T., Popov, S., Li, J., Friberg, A.T. and Zhang, Y. 2011, "Receiver implemented RF pilot tone phase noise mitigation in coherent optical nPSK and nQAM systems", Opt. Express. 19, 15 (Jul. 2011), 14487-14494, ist bekannt, ein Pilotton zu verwenden, welcher entweder auf einer zweiten Polarisation des Kanals erzeugt und an den Empfänger übertragen wird, oder als elektrischer Pilotton auf der Empfängerseite produziert wird, indem die hochfrequenten Anteile der Signalphase herausgefiltert werden. Aufgrund des Pilottons ist es möglich, Frequenz und Phase des Datensignals zu kompensieren. Nachteilig hieran ist jedoch, dass durch den optischen Pilotton die spektrale Effizienz sinkt, da nur eine Polarisation zur Datenübertragung verwendet werden kann. Dahingegen ist der Nachteil des elektrischen Pilottons, dass nur ein relativ kleiner Frequenzoffset berücksichtigt werden kann.

Weiterhin ist es bekannt, die Frequenz- und Phasenwiederherstellung mit Hilfe von Trainingssequenzen zu realisieren. Dabei werden pro Signalframe mehrere Trainingssymbole eingeführt, welche am Empfänger bekannt sind und eine Erkennung von Frequenz- und Phasenoffset zulassen. Jedoch ist auch dieses Verfahren sehr rechenintensiv. Weiterhin sinkt die spektrale Effizienz durch die Trainingssymbole.

Die Beschränkungen des vorhandenen Stands der Technik ergeben sich aus den verfügbaren Analog-Digital-Wandlern, welche derzeit lediglich eine Bandbreite von wenigen GHz aufweisen. Dagegen sind Transceiver, also 1-Bit Analog-Digital-Wandler, bereits mit Datenraten von 30 GBit/s und mehr verfügbar. Da für die digitale Signalverarbeitung mindestens zwei Abtastpunkte pro Symbol benötigt werden, ist die Analog-Digital-Wandler-Abtastrate eine kritische Beschränkung für hochratige optische Freiraum-Datenkommunikationssysteme.

Aufgabe der vorliegenden Erfindung ist es, ein optisches Freiraum-Daten-kommunikationssystem zu schaffen, welches einfach aufgebaut ist und eine hochratige Datenübertragung ermöglicht.

US 2007/286609 beschreibt ein optisches Signalübertragungssystem und ein Vorspannungsverfahren sowie eine Vorrichtung und ein System. Ein optischer Signalgenerator empfängt ein Vorspannungssignal und ein Ausgangssignal. Ein Burst-/Sendefreigabesignal versetzt das Sendesystem in den Sendemodus, z. B. während eines Sendefensters in einer zeitmultiplexten Umgebung wie PON-Netzwerken. Eine Vorspannungsschaltung versorgt den Treiber und/oder den optischen Signalgenerator mit einer Vorspannung. Die Vorspannungsschaltung umfasst eine oder mehrere Stufen, die selektiv aktiviert werden, um den Treiber und den optischen Signalgenerator während der Sendefenster angemessen vorzuspannen, aber während der Zeiträume, in denen das System nicht sendet, deaktiviert werden.

US 2003/219253 beschreibt eine Vorrichtung und ein Verfahren zum Identifizieren und Einleiten von Korrekturmaßnahmen zur Wiederherstellung einer primären drahtlosen Datenverbindung während ungünstiger Betriebsbedingungen.

Die Aufgabe wird gelöst durch ein optisches Freiraum-Datenkommunikations-system gemäß Anspruch 1 sowie ein Verfahren gemäß Anspruch 9.

Das erfindungsgemäße optische Freiraum-Datenkommunikationssystem, insbesondere für die optische Satellitenkommunikation, weist einen Sender auf zur Erzeugung eines optischen Datensignals und einen Empfänger zum Empfangen des optischen Datensignals. Dabei kann der Sender auf der Erde angeordnet sein, wohingegen der Empfänger in einem Satelliten untergebracht ist. Die Erfindung ist jedoch hierauf nicht beschränkt. Weiterhin weist der Sender eine Lichtquelle auf zur Erzeugung eines Trägers sowie mindestens einen Modulator. Dabei wird mittels dem Modulator ein langsames Signal auf den Träger aufmoduliert und ebenso ein schnelles Signal auf den Träger aufmoduliert. Anders ausgedrückt, wird durch den Modulator ein erstes Signal auf den Träger aufmoduliert und ein zweites Signal auf den Träger aufmoduliert, wobei das zweite Signal eine höhere Modulationsfrequenz aufweist als das erste Signal. Dabei wird zumindest auf das schnelle Signal ein Datensignal aufmoduliert, welches die zu übertragenden Daten enthält. Insbesondere kann auch auf das langsame Signal ein weiteres Datensignal aufmoduliert werden. Dabei kann alternativ für das langsame Signal ein langsamer Modulator vorgesehen sein und für das schnelle Signal ein schneller Modulator. Das langsame Signal und das schnelle Signal werden zu einem optischen Datensignal miteinander kombiniert. Das so erzeugte optische Datensignal wird sodann an den Empfänger übertragen.

Erfindungsgemäß weist der Empfänger einen Lokaloszillator auf, der mit dem empfangenen Datensignal überlagert wird. Hierdurch wird das empfangene Signal in das Basisband überführt. Dabei ist insbesondere genau ein Lokaloszillator vorgesehen, sofern lediglich ein Träger verwendet wird. Sodann wird das empfangene Signal insbesondere von der optischen Domäne in die elektrische Domäne überführt beispielsweise durch Photozellen. Das optische Signal wird somit in ein elektrisches Signal umgesetzt. Hierdurch wird insbesondere ein kohärenter Empfänger gebildet. Weiterhin weist der Empfänger einen Analog-Digital-Wandler (ADC) auf zur Demodulation des langsamen Signals. Dabei ist mit dem Analog-Digital-Wandler eine Auswertevorrichtung verbunden, wobei die Auswertevorrichtung ausgebildet ist, um Signalparameter der Übertragung zu ermitteln. Weiterhin weist der Empfänger einen Transceiver auf zur Demodulation des schnellen Signals, wobei die Auswertevorrichtung ausgebildet ist, so dass das durch den Transceiver demodulierte Signal mittels der ermittelten Signalparameter kompensiert wird. Durch Vorsehen eines langsamen Signals ist es lediglich erforderlich, dieses langsame Signal mittels eines Analog-Digital-Wandlers in die digitale Domäne zu überführen, um die Signalparameter der Übertragung zu bestimmen. Das schnelle Signal, welches insbesondere die zu übertragenden Daten enthält, kann sodann mit schnellen Transceivern demoduliert werden, wobei die durch das langsame Signal ermittelten Signalparameter berücksichtigt werden. Somit sinken die Anforderungen an den zu verwendenden Analog-Digital-Wandler, da dieser lediglich geeignet sein muss, ein langsames Signal zu demodulieren, und für das schnelle Signal können schnelle Transceiver verwendet werden. Somit sinkt der erforderliche Aufwand gleichzeitig mit der Herabsetzung des erforderlichen Rechenaufwands, so dass eine hochratige Datenkommunikation ermöglicht wird. Gleichzeitig ist es möglich, das langsame Signal und das schnelle Signal mit einem einzelnen Träger zu übermitteln, so dass spektrale Effizienz der Übertragung hoch ist. Vorzugsweise ist das langsame Signal mit weniger als 10Gbaud, insbesondere weniger als 5GBaud und bevorzugt mit 1GBaud moduliert. Insbesondere ist das langsame Signal derart moduliert, dass geeignete Analog-Digital-Wandler verwendet werden können, welche insbesondere in der Raumfahrt nutzbar sind. Solche Analog-Digital-Wandler weisen insbesondere eine hohe Strahlungsfestigkeit auf sowie eine hohe Ausfallsicherheit.

Vorzugsweise ist das schnelle Signal mit mehr als 10GBaud, insbesondere mehr als 40GBaud und bevorzugt mit mehr als 80GBaud moduliert. Hierdurch ist es möglich, eine hochratige Datenübertragung zu ermöglichen, wobei die technischen Anforderungen an den Empfänger niedrig gehalten werden können. Insbesondere können bereits heutige bekannte Transceiver verwendet werden.

Vorzugsweise beinhalten die Signalparameter zumindest die Phase und/oder die Zentralfrequenz bzw. den Frequenzoffset zwischen Lokaloszillator und Lichtquelle des Senders und/oder die Polarisation. Durch diese Signalparameter kann bei der Demodulation des schnellen Signals in das Basisband ein störungsarmes Basisbandsignal erhalten werden.

Vorzugsweise ist der Lokaloszillator nicht synchronisiert, und insbesondere ist keine Phasen-Regel-Schleife vorgesehen. Hierdurch sinkt die Komplexität des Datenkommunikationssystems erheblich. Dadurch, dass das langsame Signal mittels Analog-Digital-Wandler herangezogen wird, um die Signalparameter der Übertragung zu ermitteln, ist eine Synchronisierung des Lokaloszillators nicht erforderlich.

Vorzugsweise handelt es sich bei dem Transceiver um einen 1bit-Analog-Digital-Wandler. Dieser ist schnell, einfach im Aufbau, kostengünstig und zuverlässig.

Weiterhin existieren bereits solche Transceiver, welche für die Raumfahrt geeignet sind.

Vorzugsweise handelt es sich bei dem Analog-Digital-Wandler um einen mindestens 2-bit-Wandler, insbesondere einen mindestens 4-bit-Wandler und bevorzugt einen mindestens 8-bit Wandler. Hierdurch wird sichergestellt, dass ausreichend Quantisierungsstellen vorliegen, um aus dem langsamen Signal die Signalparameter der Übertragung zu ermitteln.

Vorzugsweise ist die Lichtquelle ausgebildet zur Erzeugung eines zweiten Trägers und/oder der Sender weist eine zweite Lichtquelle auf zur Erzeugung eines zweiten Trägers, wobei alle Träger unterscheidbar sind und somit zumindest ein Parameter der jeweiligen Träger unterschiedlich gewählt ist. Insbesondere sind bei Verwendung mehrerer Lichtquellen die Lichtquellen zur Erzeugung weiterer Träger phasensynchronisiert. Weiterhin weist der Sender einen weiteren Modulator auf, so dass auf den zweiten Träger ein zweites schnelles Signal aufmoduliert wird. Dabei weist insbesondere jedes schnelle Signal zu übertragende Daten auf. Weiterhin weist der Sender einen Multiplexer auf, mittels dem alle Träger zu einem gemeinsamen optischen Datensignal kombiniert werden, welches an den Empfänger übertragen wird. Ebenso weist der Empfänger einen Demultiplexer auf zur Trennung des empfangenen optischen Datensignals gemäß den jeweiligen Trägern. Weiterhin weist der Empfänger einen zweiten Lokaloszillator auf, der mit dem zweiten schnellen Signal des zweiten Trägers überlagert wird. Hierdurch wird das empfangene zweite schnelle Signal ins Basisband überführt und kann sodann in ein elektrisches Signal umgewandelt werden. Somit wird auch der zweite Träger mittels eines kohärenten Empfängers empfangen. Insbesondere sind dabei die vorhandenen Lokaloszillatoren miteinander synchronisiert. Weiterhin weist der Empfänger einen zweiten Transceiver auf zur Demodulation des zweiten schnellen Signals, wobei die Auswertevorrichtung ausgebildet ist, so dass das durch den zweiten Transceiver demodulierte zweite Signal mittels der ermittelten Signalparameter kompensiert wird. Somit ist ein Freiraum-Datenkommunikationssystem geschaffen, durch welches eine Vielzahl von DWDM-Kanälen gleichzeitig übertragen und allesamt mittels schnellen und kostengünstigen Transceivern digitalisiert werden können. Hierbei wird ein einzelnes langsames Signal verwendet zur Kompensation der Phase und eines eventuell vorhandenen Frequenzoffsets zwischen den jeweiligen Lokaloszilllatoren und der Lichtquelle bzw. den Lichtquellen des Senders.

Vorzugsweise ist der Sender ausgebildet, weitere Träger zu erzeugen, so dass mittels weiterer Modulatoren weitere schnelle Signale erzeugt werden. Ebenso weist der Empfänger weitere Lokaloszillatoren auf durch Transformation der empfangenen weiteren schnellen Signale ins Basisband, sowie weitere Transceiver zur Demodulation der weiteren schnellen Signale. Dabei entspricht die Anzahl der verwendeten Träger der Anzahl der im Empfänger vorgesehenen Lokaloszillatoren. Somit ist die Erfindung nicht beschränkt auf lediglich zwei Träger, sondern kann zu einem vollen DWDM-Grid mit beliebig vielen Trägern erweitert werden entsprechend der zur Verfügung stehenden Übertragungsbandbreite.

Vorzugsweise unterscheiden sich die Träger in der Wellenlänge und/oder der Polarisation.

Vorzugsweise sind die weiteren schnellen Signale ausgebildet wie vorstehend beschrieben.

Vorzugsweise sind die weiteren Transceiver ausgebildet wie vorstehend beschrieben.

Weiterhin betrifft die vorliegende Erfindung ein Verfahren zur optischen Freiraum-Datenübertragung, bei welchem ein erster optischer Träger erzeugt wird und der erste Träger aufgespalten wird in einen ersten Teil und einen zweiten Teil. Sodann wird auf den ersten Teil des ersten Trägers ein langsames Signal aufmoduliert. Ebenso wird auf den zweiten Teil des ersten Trägers ein schnelles Signal aufmoduliert, wobei insbesondere zumindest das schnelle Signal zu übertragende Daten enthält. Der erste Teil des ersten Trägers wird mit dem zweiten Teil des ersten Trägers kombiniert zu einem optischen Datensignal. Das so erzeugte optische Datensignal wird in einer Freiraumübertragung an einen Empfänger übertragen. Im Empfänger wird das empfangene optische Datensignal mittels einem Lokaloszillator überlagert und hierdurch ins Basisband überführt. Das so erhaltene Signal wird in einen ersten Teil und einen zweiten Teil aufgespalten. Aus dem ersten Teil wird mittels eines Analog-Digital-Wandlers das langsame Signal demoduliert, und aus dem demodulierten langsamen Signal werden Signalparameter der Übertragung ermittelt. Aus dem zweiten Teil wird mittels eines Transceivers das schnelle Signal demoduliert, wobei das demodulierte schnelle Signal mittels der ermittelten Signalparameter kompensiert wird.

Vorzugsweise wird bei dem Verfahren ein zweiter Träger erzeugt, wobei die Träger alle jeweils unterscheidbar sind. Insbesondere sind die Träger miteinander synchronisiert. Weiterhin wird auf den zweiten Träger ein zweites schnelles Signal aufmoduliert, wobei insbesondere jedes schnelle Signal zu übertragende Daten enthalten kann. Der erste Teil des ersten Trägers und der zweite Teil des ersten Trägers sowie der zweite Träger werden zu einem gemeinsamen optischen Datensignal kombiniert und an den Empfänger übertragen. Im Empfänger wird das übertragene optische Datensignal nach dem Träger in empfangene schnelle Signale aufgespalten. Sodann wird ebenfalls das zweite schnelle Signal mit einem zweiten Lokaloszillator überlagert und hierdurch ins Basisband überführt. Hierbei sind insbesondere die vorhandenen Lokaloszillatoren miteinander synchronisiert. Nachfolgend wird das empfangene zweite schnelle Signal mittels eines zweiten Transceivers demoduliert, wobei das demodulierte zweite schnelle Signal mittels der ermittelten Signalparameter kompensiert wird.

Weiterhin ist das vorliegende Verfahren anhand der Merkmale des vorstehend beschriebenen optischen Freiraum-Datenkommunikationssystems weitergebildet.

Nachfolgend wird die Erfindung anhand bevorzugter Ausführungsformen unter Bezugnahme auf die beigefügten Zeichnungen näher erläutert.

Es zeigen:
- Fig. 1: das erfindungsgemäße optische Freiraum-Datenkommunikations-system mit einem Träger und
- Fig. 2: eine weitere Ausführungsform des erfindungsgemäßen optischen Freiraum-Datenkommunikationssystems mit einer Vielzahl von Trägern.

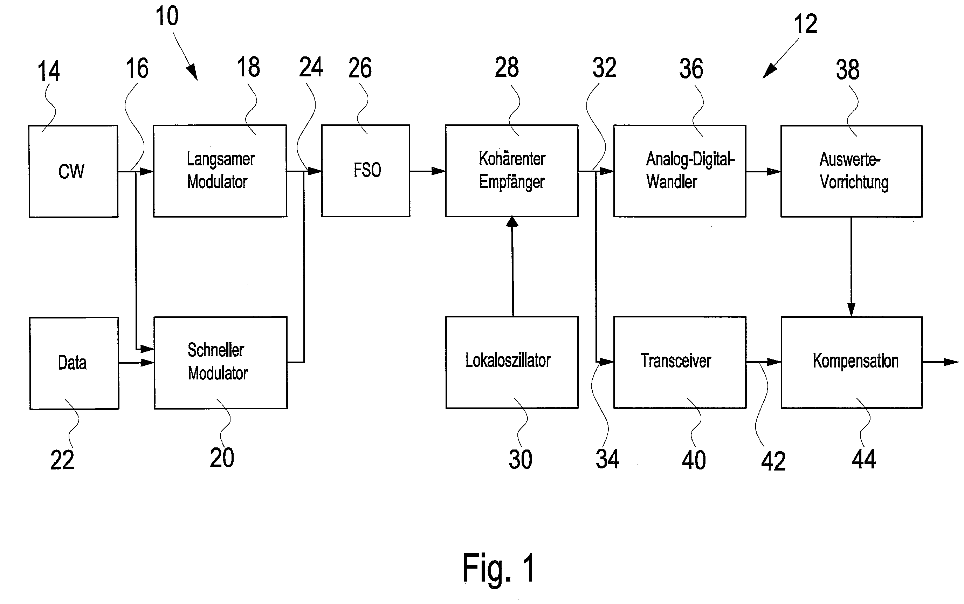

Das erfindungsgemäße optische Freiraum-Datenkommunikationssystem gezeigt in Fig. 1 weist einen Sender 10 sowie einen Empfänger 12 auf. Der Sender 10 weist eine Lichtquelle 14 auf zur Erzeugung eines Trägers 16. Der Träger 16 wird in einen ersten Teil und einen zweiten Teil aufgespalten. Der erste Teil des Trägers 16 wird in einem langsamen Modulator 18 mit einem langsamen Signal moduliert. Der zweite Teil des Trägers 16 wird in einem schnellen Modulator 20 mit einem schnellen Signal moduliert. Alternativ können der schnelle Modulator 20 und der langsame Modulator 18 zu einem einzelnen Modulator zusammengefasst werden. Dabei kann dieses schnelle Signal Daten 22 enthalten. Zusätzlich hierzu kann auch das langsame Signal Daten enthalten und sodann übertragen. Im vorliegenden Beispiel erfolgt die langsame Modulation beispielsweise mit 1GBaud, wohingegen die schnelle Modulation beispielsweise mit 40GBaud erfolgt. Der erste Teil und der zweite Teil werden sodann zu einem optischen Datensignal 24 zusammengefügt. Das optische Datensignal 24 wird mittels einem Laserlink oder einer optischen Freiraumübertragung 26 (Free-Space-Optics - FSO) an den Empfänger 12 übertragen. Im Empfänger 12 wird das so empfangene optische Datensignal in einen kohärenten Empfänger 28 mit dem Signal eines Lokaloszillators 30 überlagert. Der Lokaloszillator 30 ist dabei nicht mit der Lichtquelle 14 synchronisiert. Auch weist der Lokaloszillator 30 keine Phasen-Regel-Schleife auf zur Synchronisation des Lokaloszillators 30 mit der Lichtquelle 14. Das so überlagerte Signal wird aufgespalten in einen ersten Teil 32 und in einen zweiten Teil 34. Der erste Teil 32 des Signals wird mittels eines Analog-Digital-Wandlers 36 von der elektrischen Domäne in die digitale Domäne überführt, wobei das langsame Signal mittels dem Analog-Digital-Wandler 36 demoduliert wird. Der Analog-Digital-Wandler 36 ist mit einer Auswertevorrichtung 38 verbunden. Mittels der Auswertevorrichtung 38 werden Signalparameter wie beispielsweise Phase, Frequenz oder Polarisation des Signals ermittelt. Im vorliegenden Beispiel handelt es sich bei dem Analog-Digital-Wandler 36 um einen 8Bit-Analog-Digital-Wandler. Die Erfindung ist jedoch hierauf nicht beschränkt.

Der zweite Teil 34 des Signals wird mit einem schnellen Transceiver 40 von der elektrischen Domäne in die digitale Domäne überführt. Dabei handelt es sich im vorliegenden Beispiel bei dem Transceiver 40 um einen 1Bit-Transceiver. Das durch den Transceiver 40 demodulierte Signal 42 wird über die durch die Auswertevorrichtung 38 ermittelten Signalparameter kompensiert bzw. korrigiert zur Demodulation des ursprünglichen schnellen Signals und damit auch der Daten 22. Somit ist es möglich, mit dem optischen Freiraum-Datenkommunikationssystem einen langsamen Analog-Digital-Wandler zu verwenden, da dieser lediglich das langsame Signal demodulieren muss zur Bestimmung der Signalparameter. Anhand dieses langsamen Signals werden die Signalparameter wie Polarisation, Phase und Frequenz der Übertragung ermittelt, und die so bekannten Parameter werden sodann bei der Demodulation des schnellen Signals berücksichtigt. Hierzu wird das schnelle Signal mittels schnellen Transceivern demoduliert. Aufwendige Analog-Digital-Wandler sind hierzu nicht erforderlich. Weiterhin wird die zur Verfügung stehende Bandbreite optimal ausgenutzt, da das langsame Signal und das schnelle Signal einen gemeinsamen Träger aufweisen.

In dem nachfolgend beschriebenen Ausführungsbeispiel werden gleiche oder ähnliche Bauteile mit denselben Bezugszeichen gekennzeichnet.

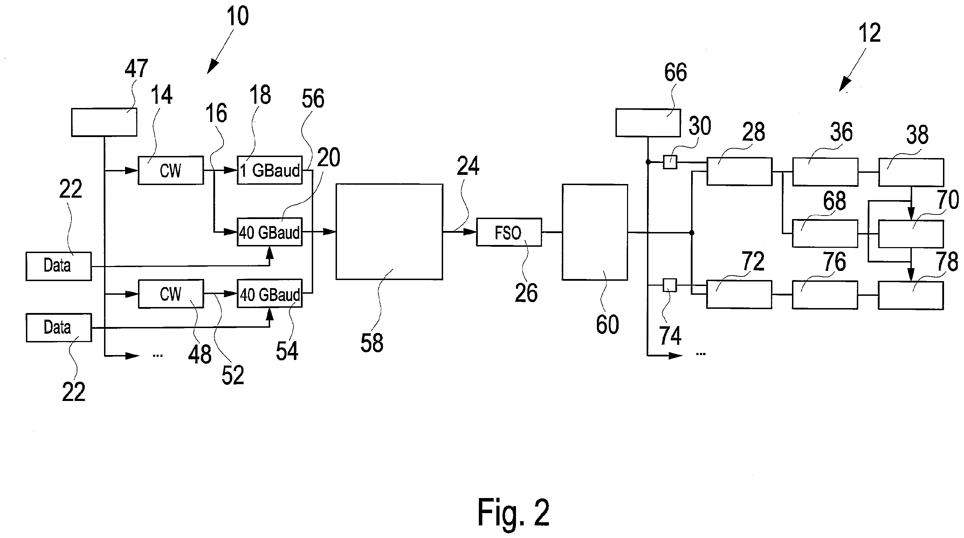

In einem weiteren Ausführungsbeispiel des optischen Freiraum-Datenkommunikationssystems gezeigt in Fig. 2 ist eine erste Lichtquelle 14 zur Erzeugung eines ersten Trägers 16 vorgesehen sowie eine zweite Lichtquelle 48 zur Erzeugung eines zweiten Trägers 52. Auf den ersten Träger 16 wird mittels einem langsamen Modulator 18 ein langsames Signal 56 aufmoduliert. Ebenso wird mittels einem ersten schnellen Modulator 20 auf den ersten Träger 16 ein erstes schnelles Signal aufmoduliert. Das erste schnelle Signal und auch das langsame Signal kann dabei zu übertragene Daten 22 enthalten. Auf den zweiten Träger 52 wird ein zweites schnelles Signal mittels einem zweiten schnellen Modulator 54 aufmoduliert. Dieses zweite schnelle Signal kann ebenfalls Daten 22 enthalten. Die schnellen Signale sind dabei im vorliegenden Beispiel mit 40Gbit/s moduliert. Weitere Lichtquellen und Modulatoren zur Erzeugung weiterer schneller Signale können wie angedeutet vorhanden sein. Alternativ hierzu kann eine einzelne Lichtquelle 14 ausgebildet sein, eine Vielzahl von Trägern zu erzeugen. Dabei sind alle vorhandenen Träger voneinander unterscheidbar beispielsweise durch eine unterschiedliche Wellenlänge oder Polarisation. Das langsame Signal 56 und die schnellen Signale werden in einem DWDM Multiplexer 58 zu einem gemeinsamen optischen Datensignal 24 zusammengeführt. Dieses gemeinsame optische Datensignal wird sodann mittels optischer Freiraumübertragung 26 bzw. Laserlink an den Empfänger 12 übertragen. Der Empfänger 12 weist dabei einen DWDM Demultiplexer 60 auf, der das empfangene optische Datensignal entsprechend der Wellenlänge oder Polarisation entsprechend den jeweiligen Trägern aufteilt. In einem ersten kohärenten Empfänger 28 wird das empfangene langsame Signal und das empfangene erste schnelle Signal des ersten Trägers von der optischen Domäne in die elektrische Domäne überführt. Sodann wird mittels eines Analog-Digital-Wandlers 36 das elektrische Signal des langsamen Signals digitalisiert und mittels einer Auswertevorrichtung 38 Signalparameter wie beispielsweise Polarisation, Phase und Frequenz des übertragenen optischen Datensignals ermittelt. Dabei wird im kohärenten Empfänger 28 das optische Datensignal mit dem Signal eines Lokaloszillators 30 überlagert. Durch den kohärenten Empfänger 28 wird das erste schnelle Signal ebenfalls von der optischen Domäne in die elektrische Domäne überführt und sodann mittels Transceivern 68 digitalisiert. Hierbei erfolgt eine Kompensation bzw. Korrektur 70 anhand der durch die Auswertevorrichtung 38 ermittelten Signalparameter.

In einem weiteren kohärenten Empfänger 72 wird das empfangene zweite schnelle Signal des zweiten Trägers 52 mit dem Signal eines zweiten Lokaloszillators 74 überlagert. Dabei sind alle Lokaloszillatoren des Empfängers 12 über eine gemeinsame Referenzschaltung 66 miteinander synchronisiert. Nachfolgend wird das so erhaltene Signal mit einem Transceiver 76 digitalisiert. Anhand der durch die Auswertevorrichtung 38 ermittelten Signalparameter wird das so digitalisierte Signal des empfangenen zweiten schnellen Signals kompensiert. Bei Vorsehen weiterer Träger im Sender 10, sind im Empfänger 12 weitere kohärente Empfänger und Transceiver vorgesehen, so dass alle Kanäle des DWDM-Grids demoduliert werden können. Insbesondere handelt es sich bei den Transceivern 68, 76 um 1Bit-Transceiver, welche schnell sind und auch höchstratige schnelle Signale zuverlässig demodulieren können. Weiterhin sind 1Bit-Transceiver kostengünstig und geeignet für die Weltraumanwendung. Somit ist ein einfacher Aufbau gegeben zur hochratigen optischen Datenübertragung, der auf eine Phasen-Regelschleife verzichten kann und die vorhandene Bandbreite optimal ausnutzt.

## Patentansprüche

1. Optisches Freiraum-Datenkommunikationssystem, insbesondere für die optische Satellitenkommunikation, mit
einem Sender (10) zur Erzeugung eines optischen Datensignals und einem Empfänger des optischen Datensignals,
**dadurch gekennzeichnet, dass** der Sender (10) eine Lichtquelle (14) aufweist zur Erzeugung eines optischen Trägers und mindestens einen Modulator (18, 20) aufweist,
wobei der mindestens eine Modulator (18, 20) ein langsames Signal auf den Träger aufmoduliert und ein schnelles Signal auf den Träger aufmoduliert, wobei das schnelle Signal eine höhere Modulationsfrequenz aufweist als das langsame Signal,
wobei das langsame Signal und das schnelle Signal zu einem optischen Datensignal (24) kombiniert werden, welches an den Empfänger übertragen wird,
wobei insbesondere zumindest das schnelle Signal zu übertragende Daten enthält,
wobei der Empfänger (12) einen Lokaloszillator (30) aufweist, der mit dem empfangenen Datensignal überlagert wird,
wobei der Empfänger (12) einen Analog-Digital-Wandler (36) aufweist zur Demodulation des langsamen Signals, wobei mit dem Analog-Digital-Wandler (36) eine Auswertevorrichtung (38) verbunden ist, wobei die Auswertevorrichtung (38) ausgebildet ist, um Signalparameter der Übertragung zu ermitteln,
wobei der Empfänger (12) einen Transceiver (40) aufweist zur Demodulation des schnellen Signals, wobei die Auswertevorrichtung (38) ausgebildet ist, so dass das durch den Transceiver (40) demodulierte Signal mittels der ermittelten Signalparameter kompensiert wird.

2. Optisches Freiraum-Datenkommunikationssystem nach Anspruch 1, **dadurch gekennzeichnet, dass** das langsame Signal mit weniger als 10GBaud, insbesondere weniger als 5GBaud und bevorzugt mit 1GBaud moduliert ist.

3. Optisches Freiraum-Datenkommunikationssystem nach Anspruch 1 oder 2, **dadurch gekennzeichnet, dass** das schnelle Signal mit mehr als 10GBaud, insbesondere mehr als 40GBaud und bevorzugt mit mehr als 80GBaud moduliert ist.

4. Optisches Freiraum-Datenkommunikationssystem nach einem der Ansprüche 1 bis 3, **dadurch gekennzeichnet, dass** die Signalparameter zumindest die Phase und/oder die Zentralfrequenz und/oder die Polarisation umfassen.

5. Optisches Freiraum-Datenkommunikationssystem nach einem der Ansprüche 1 bis 4, **dadurch gekennzeichnet, dass** der Lokaloszillator (30) nicht synchronisiert ist, insbesondere nicht mit dem Sender, und bevorzugt keine Phasen-Regel-Schleife vorgesehen ist.

6. Optisches Freiraum-Datenkommunikationssystem nach einem der Ansprüche 1 bis 5, **dadurch gekennzeichnet, dass** es sich bei dem Transceiver (40) um einen 1bit-Analog-Digital-Konverter handelt.

7. Optisches Freiraum-Datenkommunikationssystem nach einem der Ansprüche 1 bis 6, **dadurch gekennzeichnet, dass** es sich bei dem Analog-Digital-Wandler (36) um einen mindestens 2-bit-Wandler, insbesondere mindestens einen 4-bit-Wandler und bevorzugt mindestens einen 8-bit Wandler handelt.

8. Optisches Freiraum-Datenkommunikationssystem nach einem der Ansprüche 1 bis 7, **dadurch gekennzeichnet, dass** die Lichtquelle ausgebildet ist zur Erzeugung eines zweiten optischen Trägers und/oder der Sender (10) eine zweite Lichtquelle (14, 46, 48) aufweist zur Erzeugung eines zweiten optischen Trägers,
wobei alle Träger unterscheidbar sind und insbesondere miteinander synchronisiert sind,
wobei der Sender (10) einen weiteren Modulator (54) aufweist, so dass auf den zweiten Träger ein zweites schnelles Signal aufmoduliert wird,
wobei insbesondere jedes schnelle Signal zu übertragende Daten enthält,
wobei der Sender (10) einen Multiplexer (58) aufweist zur Kombination aller Träger zu einem gemeinsamen optischen Datensignal (24), welches an den Empfänger (12) übertragen wird,
wobei der Empfänger einen Demultiplexer (60) aufweist zur Trennung des optischen Datensignals in die entsprechenden Träger,
wobei der Empfänger einen zweiten Lokaloszillator aufweist, welcher mit dem zweiten schnellen Signal überlagert wird,
wobei der Empfänger einen zweiten Transceiver aufweist, zur Demodulation des zweiten schnellen Signals, wobei die Auswertevorrichtung ausgebildet ist, so dass das durch den zweiten Transceiver demodulierte zweite Signal mittels der ermittelten Signalparameter kompensiert wird.

9. Verfahren zur optischen Freiraum-Datenübertragung, bei welchem
ein erster optischer Träger erzeugt wird;
der erste Träger aufgespalten wird in einen ersten Teil und einen zweiten Teil;
auf den ersten Teil des ersten Trägers ein langsames Signal aufmoduliert wird;
auf den zweiten Teil des ersten Trägers ein schnelles Signal aufmoduliert wird, wobei insbesondere zumindest das schnelle Signal zu übertragende Daten enthält, wobei das schnelle Signal eine höhere Modulationsfrequenz aufweist als das langsame Signal;
der erste Teil des ersten Trägers mit dem zweiten Teil des ersten Trägers kombiniert wird;
das so erzeugte optische Datensignal in einer Freiraumübertragung an einen Empfänger übertragen wird,
das optische Datensignal mittels einem Lokaloszillator überlagert wird; das so erhaltenen Signal in einen ersten Teil und einen zweiten Teil aufgespalten wird;
aus dem ersten Teil mittels eines Analog-Digital-Wandlers das langsame Signal demoduliert wird;
aus dem demodulierten langsamen Signal Signalparameter ermittelt werden;
aus dem zweite Teil mittels eines Transceivers das schnelle Signal demoduliert wird, wobei das demodulierte schnelle Signal mittels der ermittelten Signalparameter kompensiert wird.

10. Verfahren nach Anspruch 9, bei welchem ein zweiter optischer Träger erzeugt wird,
wobei alle Träger jeweils unterscheidbar sind und insbesondere synchronisiert sind;
auf den zweiten Träger ein zweites schnelles Signal aufmoduliert wird, wobei insbesondere jedes dieser Signale zu übertragende Daten enthalten kann;
alle Träger überlagert werden zu einem gemeinsamen optischen Datensignal;
im Empfänger das übertragene optische Datensignal nach dem jeweiligen Träger in empfangene schnelle Signale aufgespalten wird;
das zweite schnellen Signal mit einem zweiten Lokaloszillator überlagert wird;
das zweite schnelle Signal mittels eines zweiten Transceivers demoduliert wird, wobei das demodulierte zweite schnelle Signal mittels der ermittelten Signalparameter kompensiert wird.

## Claims

1. An optical free space data communication system, in particular for optical satellite communication, comprising
a transmitter (10) for generating an optical data signal and a receiver of the optical data signal.
**characterized in that** the transmitter (12) comprises a light source (14) for generating an optical carrier, and at least one modulator (18, 20),
the at least one modulator (18, 20) modulating a slow signal onto the carrier and modulates a fast signal onto the carrier, the fast signal having a higher modulation frequency than the slow signal,
the slow signal and the fast signal being combined into an optical data signal (24) which is transmitted to the receiver,
in particular at least the fast signal including data to be transmitted,
the receiver (12) comprising a local oscillator (30) on which the received data signal is superimposed,
the receiver (12) comprising an analog-to-digital converter (36) for demodulating the slow signal, an evaluation device (38) being connected to the analog-to-digital converter (36), the evaluation device (38) being configured to acquire signal parameters of the transmission,
the receiver (12) comprising a transceiver (40) for the demodulation of the fast signal, the evaluation device (38) being configured such that the signal demodulated by the transceiver (40) is compensated for by the acquired signal parameters.

2. The optical free space data communication system according to claim 1, **characterized in that** the slow signal is modulated with less than 10 GBaud, in particular less than 5 GBaud, and preferably with 1 GBaud.

3. The optical free space data communication system according to claim 1 or 2, **characterized in that** the fast signal is modulated with more than 10 GBaud, in particular more than 40 GBaud, and preferably more than 80 GBaud.

4. The optical free space data communication system according to any one of claims 1 to 3, **characterized in that** the signal parameters comprise at least one of the phase, the centre frequency, and the polarization.

5. The optical free space data communication system according to any one of claims 1 to 4, **characterized in that** the local oscillator (30) is not synchronized, in particular not with the transmitter, and preferably no phase control circuit is provided.

6. The optical free space data communication system according to any one of claims 1 to 5, **characterized in that** the transceiver (40) is a 1-bit analog-to-digital converter.

7. The optical free space data communication system according to any one of claims 1 to 6, **characterized in that** the analog-to-digital converter (36) is at least a 2-bit converter, in particular a at least a 4-bit converter, and preferably at least an 8-bit converter.

8. The optical free space data communication system according to any one of claims 1 to 7, **characterized in that** the light source is configured to generate a second optical carrier and/or the transmitter (10) comprises a second light source (14, 46, 48) for generating a second optical carrier,
all carriers being discernible and being, in particular, synchronized with each other,
the transmitter (10) comprising a further modulator (54), so that a second fast signal is modulated onto the second carrier,
in particular each fast signal including data to be transmitted,
the transmitter (10) comprising a multiplexer (58) for combining all carriers into a common optical data signal (24) which is transmitted to the receiver (12),
the receiver comprising a demultiplexer (60) for separating the optical data signal into the corresponding carriers,
the receiver comprising a second local oscillator onto which the second fast signal is superimposed,
the receiver comprising a second transceiver for the demodulation of the second fast signal, the evaluation device being configured such that the second signal demodulated by the transceiver is compensated for by the acquired signal parameters.

9. A method for optical free space data transmission, in which
a first optical carrier is generated;
the first carrier is divided into a first part and a second part;
a slow signal is modulated onto the first part of the first carrier;
a fast signal is modulated onto the second part of the first carrier, in particular at least the fast signal including data to be transmitted, the fast signal having a higher modulation frequency than the slow signal;
the first part of the first carrier is combined with the second part of the first carrier;
the optical data signal thus generated is transmitted to a receiver in a free space transmission;
the optical data signal is superimposed using a local oscillator;
the signal thus obtained in divided into a first part and a second part;
the slow signal is demodulated from the first part using an analog-to-digital converter;
signal parameters are acquired from the demodulated slow signal;
the fast signal is demodulated from the second part using a transceiver, the demodulated fast signal being compensated for by the acquired signal parameters.

10. The method according to claim 9, in which a second optical carrier is generated,
all carriers are discernible and are, in particular, synchronized;
a second fast signal is modulated onto the second carrier, wherein, in particular, each of these signals can include data to be transmitted;
all carriers are superimposed to form a common optical data signal;
in the receiver, the transmitted optical data signal is divided into received fast signals according to the respective carrier;
a second local oscillator is superimposed on the second fast signal;
the second fast signal is demodulated using a second transceiver, the demodulated second fast signal being compensated for by the acquired signal parameters.

## Revendications

1. Système optique de communication de données en espace libre, en particulier pour la communication optique par satellite, comprenant
un émetteur (10) permettant de produire un signal de données optique et un récepteur du signal de données optique,
**caractérisé en ce que** l'émetteur (10) comprend une source lumineuse (14) permettant de produire une porteuse optique et comprend au moins un modulateur (18, 20),
ledit au moins un modulateur (18, 20) modulant un signal lent sur la porteuse et modulant un signal rapide sur la porteuse, le signal rapide comprenant une fréquence de modulation supérieure à celle du signal lent,
le signal lent et le signal rapide étant combinés pour former un signal de données optique (24) qui est transmis au récepteur,
en particulier au moins le signal rapide contenant des données à transmettre,
le récepteur (12) comprenant un oscillateur local (30) auquel le signal de données reçu est superposé,
le récepteur (12) comprenant un convertisseur analogique-numérique (36) pour la démodulation du signal lent, un dispositif d'évaluation (38) étant relié au convertisseur analogique-numérique (36), le dispositif d'évaluation (38) étant conçu pour déterminer des paramètres de signal de la transmission,
le récepteur (12) comprenant un émetteur-récepteur (40) pour la démodulation du signal rapide, le dispositif d'évaluation (38) étant conçu de sorte que le signal démodulé par l'émetteur-récepteur (40) soit compensé au moyen des paramètres de signal déterminés.

2. Système optique de communication de données en espace libre selon la revendication 1, **caractérisé en ce que** le signal lent est modulé avec moins de 10 GBaud, en particulier avec moins de 5 GBaud et de manière préférée avec 1 GBaud.

3. Système optique de communication de données en espace libre selon la revendication 1 ou 2, **caractérisé en ce que** le signal rapide est modulé avec plus de 10 GBaud, en particulier avec plus de 40 GBaud et de manière préférée avec plus de 80GBaud.

4. Système optique de communication de données en espace libre selon l'une quelconque des revendications 1 à 3, **caractérisé en ce que** les paramètres de signal comprennent au moins la phase et/ou la fréquence centrale et/ou la polarisation.

5. Système optique de communication de données en espace libre selon l'une quelconque des revendications 1 à 4, **caractérisé en ce que** l'oscillateur local (30) n'est pas synchronisé, en particulier pas avec l'émetteur, et que, de manière préférée, aucune boucle de régulation de phase n'est prévue.

6. Système optique de communication de données en espace libre selon l'une quelconque des revendications 1 à 5, **caractérisé en ce que** l'émetteur-récepteur (40) est un convertisseur analogique-numérique 1 bit.

7. Système optique de communication de données en espace libre selon l'une quelconque des revendications 1 à 6, **caractérisé en ce que** le convertisseur analogique-numérique (36) est au moins un convertisseur 2 bits, en particulier au moins un convertisseur 4 bits et de manière préférée au moins un convertisseur 8 bits.

8. Système optique de communication de données en espace libre selon l'une quelconque des revendications 1 à 7, **caractérisé en ce que** la source de lumière est conçue pour produire une deuxième porteuse optique et/ou que l'émetteur (10) comprend une deuxième source de lumière (14, 46, 48) permettant de produire une deuxième porteuse optique,
toutes les porteuses étant distinctes et étant en particulier synchronisées les unes avec les autres,
l'émetteur (10) comprenant un autre modulateur (54), de sorte qu'un deuxième signal rapide soit modulé sur la deuxième porteuse,
en particulier chaque signal rapide contenant des données à transmettre,
l'émetteur (10) comprenant un multiplexeur (58) pour combiner toutes les porteuses pour former un signal de données optique (24) commun qui est transmis au récepteur (12),
le récepteur comprenant un démultiplexeur (60) pour séparer le signal de données optique pour former les porteuses correspondantes,
le récepteur comprenant un deuxième oscillateur local auquel le deuxième signal rapide est superposé,
le récepteur comprenant un deuxième émetteur-récepteur pour démoduler le deuxième signal rapide, le dispositif d'évaluation étant conçu de sorte que le deuxième signal démodulé par le deuxième émetteur-récepteur soit compensé au moyen des paramètres de signal déterminés.

9. Procédé de transmission optique de données en espace libre, dans lequel
une première porteuse optique est générée ;
la première porteuse est divisée en une première partie et une seconde partie ;
un signal lent est modulé sur la première partie de la première porteuse ;
un signal rapide est modulé sur la seconde partie de la première porteuse, en particulier au moins le signal rapide contenant des données à transmettre, le signal rapide ayant une fréquence de modulation supérieure à celle du signal lent ;
la première partie de la première porteuse est combinée avec la seconde partie de la première porteuse ;
le signal de données optique ainsi produit est transmis à un récepteur lors d'une transmission en espace libre,
le signal de données optique est superposé au moyen d'un oscillateur local ;
le signal ainsi obtenu est divisé en une première partie et une seconde partie ;
le signal lent est démodulé à partir de la première partie au moyen d'un convertisseur analogique-numérique ;
des paramètres de signal sont déterminés à partir du signal lent démodulé ;
le signal rapide est démodulé à partir de la deuxième partie au moyen d'un émetteur-récepteur, le signal rapide démodulé étant compensé au moyen des paramètres de signal déterminés.

10. Procédé selon la revendication 9, dans lequel une deuxième porteuse optique est produite,
toutes les porteuses étant distinctes et étant en particulier synchronisées ;
un deuxième signal rapide est modulé sur la deuxième porteuse, en particulier chacun desdits signaux pouvant contenir des données à transmettre ;
toutes les porteuses sont superposées pour former un signal de données optique commun ;
au sein du récepteur, le signal de données optique transmis est divisé en fonction de la porteuse respective en signaux rapides reçus ;
le deuxième signal rapide est superposé à un deuxième oscillateur local ;
le deuxième signal rapide est démodulé au moyen d'un deuxième émetteur-récepteur, le deuxième signal rapide démodulé étant compensé au moyen des paramètres de signal déterminés.
